# EUROPEAN PATENT APPLICATION

(11) **EP 4 597 949 A1**
(43) Date of publication of application: **06.08.2025**
(21) Application number: 22960065.5
(22) Date of filing: 29.09.2022
(51) Int. Cl.: H04L 27/00, H04W 24/02, H04W 28/02

(54) **METHOD FOR CONFIGURING MAPPING RELATIONSHIP BETWEEN BEARER IDENTIFIER AND EGRESS PC5 RLC CHANNEL**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/122747
(87) International publication number: WO 2024/065428

(57) **Abstract**

The present disclosure can be applied to mobile communication technology. Provided is a method for configuring a mapping relationship between a bearer identifier and an egress PC5 RLC channel. The method comprises: acquiring first configuration information; and determining a first mapping relationship according to the first configuration information, wherein the first mapping relationship refers to a mapping relationship between a second terminal device identifier, a bearer identifier and an egress PC5 RLC channel. Therefore, a mapping relationship between a second terminal device identifier, a bearer identifier and an egress PC5 RLC channel can be configured for a first terminal device.

## Description

### FIELD

The present disclosure relates to the field of communication technologies, and more particularly to a method for configuring a mapping relationship between a bearer identifier and an egress PC5 radio link control (RLC) channel.

### BACKGROUND

In the related art, in order to support direct communication between terminals, a sidelink communication method is introduced. A terminal A may not directly communicate with a terminal B, but through relay of a terminal C. The terminal A and the terminal B may be called remote terminals, the terminal C providing a relay function is a relay terminal, and all terminals communicate through sidelink unicast. This architecture is called UE to UE (U2U) relay. In a U2U scenario, how to configure a mapping relationship between a bearer identifier and an egress PC5 radio link control (RLC) channel for the remote terminal and the relay terminal is an urgent problem to be solved.

### SUMMARY

Embodiments of a first aspect of the present disclosure provide a method for configuring a mapping relationship between a bearer identifier and an egress PC5 RLC channel. The method is performed by a first terminal, and includes:
acquiring first configuration information; and
determining a first mapping relationship according to the first configuration information, in which the first mapping relationship refers to a mapping relationship between an identifier of a second terminal, a bearer identifier and an egress PC5 RLC channel.

Embodiments of a second aspect of the present disclosure provide another method for configuring a mapping relationship between a bearer identifier and an egress PC5 RLC channel. The method is performed by a relay terminal, and includes:
determining a first mapping relationship corresponding to an identifier of a first terminal, in which the first mapping relationship refers to a mapping relationship among an identifier of a second terminal, the bearer identifier and the egress PC5 RLC channel; and
sending first configuration information to the first terminal, in which the first configuration information is configured to configure the first mapping relationship to the first terminal.

Embodiments of a third aspect of the present disclosure provide another method for configuring a mapping relationship between a bearer identifier and an egress PC5 RLC channel. The method is performed by a network device, and includes:
sending first configuration information to a first terminal, in which the first configuration information is configured to configure a first mapping relationship to the first terminal, and the first mapping relationship refers to a mapping relationship among an identifier of a second terminal, the bearer identifier and the egress PC5 RLC channel.

Embodiments of a fourth aspect of the present disclosure provide another method for configuring a mapping relationship between a bearer identifier and an egress PC5 RLC channel. The method is performed by a relay terminal, and includes:
receiving second configuration information sent by a network device; and
determining a second mapping relationship according to the second configuration information, in which the second mapping relationship refers to a mapping relationship among an identifier of a first terminal, an identifier of a second terminal, the bearer identifier and the egress PC5 RLC channel.

Embodiments of a fifth aspect of the present disclosure provide another method for configuring a mapping relationship between a bearer identifier and an egress PC5 RLC channel. The method is performed by a relay terminal, and includes:
determining a second mapping relationship, in which the second mapping relationship refers to a mapping relationship among an identifier of a first terminal, an identifier of a second terminal, the bearer identifier and the egress PC5 RLC channel.

Embodiments of a sixth aspect of the present disclosure provide another method for configuring a mapping relationship between a bearer identifier and an egress PC5 RLC channel. The method is performed by a network device, and includes:
sending second configuration information to a relay terminal, in which the second configuration information is configured to configure a second mapping relationship to the relay terminal, and the second mapping relationship refers to a mapping relationship among an identifier of a first terminal, an identifier of a second terminal, the bearer identifier and the egress PC5 RLC channel.

Embodiments of a seventh aspect of the present disclosure provide a communication apparatus, including: a transceiving module configured to acquire first configuration information; and
a processing module configured to determine a first mapping relationship according to the first configuration information, in which the first mapping relationship refers to a mapping relationship among an identifier of a second terminal, a bearer identifier and an egress PC5 RLC channel.

Embodiments of an eighth aspect of the present disclosure provide a communication apparatus, including:
a processing module configured to determine a first mapping relationship corresponding to an identifier of a first terminal, in which the first mapping relationship refers to a mapping relationship among an identifier of a second terminal, a bearer identifier and an egress PC5 RLC channel; and
a transceiving module configured to send first configuration information to the first terminal, in which the first configuration information is configured to configure the first mapping relationship to the first terminal.

Embodiments of a ninth aspect of the present disclosure provide a communication apparatus, including:
a transceiving module configured to send first configuration information to a first terminal, in which the first configuration information is configured to configure a first mapping relationship to the first terminal, and the first mapping relationship refers to a mapping relationship among an identifier of a second terminal, a bearer identifier and an egress PC5 RLC channel.

Embodiments of a tenth aspect of the present disclosure provide a communication apparatus, including:
a transceiving module configured to receive second configuration information sent by a network device; and
a processing module configured to determine a second mapping relationship according to the second configuration information, in which the second mapping relationship refers to a mapping relationship among an identifier of a first terminal, an identifier of a second terminal, a bearer identifier and an egress PC5 RLC channel.

Embodiments of an eleventh aspect of the present disclosure provide a communication apparatus, including:
a processing module configured to determine a second mapping relationship, in which the second mapping relationship refers to a mapping relationship among an identifier of a first terminal, an identifier of a second terminal, a bearer identifier and an egress PC5 RLC channel.

Embodiments of a twelfth aspect of the present disclosure provides a communication apparatus, including:
a transceiving module configured to send second configuration information to a relay terminal, in which the second configuration information is configured to configure a second mapping relationship to the relay terminal, and the second mapping relationship refers to a mapping relationship among an identifier of a first terminal, an identifier of a second terminal, a bearer identifier and an egress PC5 RLC channel.

Embodiments of a thirteenth aspect of the present disclosure provide a communication apparatus, which includes a processor, and when the processor calls a computer program in a memory, the method described in the first aspect is performed.

Embodiments of a fourteenth aspect of the present disclosure provide another communication apparatus, which includes a processor, and when the processor calls a computer program in a memory, the method described in the second aspect is performed.

Embodiments of a fifteenth aspect of the present disclosure provide another communication apparatus, which includes a processor, and when the processor calls a computer program in a memory, the method described in the third aspect is performed.

Embodiments of a sixteenth aspect of the present disclosure provide another communication apparatus, which includes a processor, and when the processor calls a computer program in a memory, the method described in the fourth aspect is performed.

Embodiments of a seventeenth aspect of the present disclosure provide another communication apparatus, which includes a processor, and when the processor calls a computer program in a memory, the method described in the fifth aspect is performed.

Embodiments of an eighteenth aspect of the present disclosure provide another communication apparatus, which includes a processor, and when the processor calls a computer program in a memory, the method described in the sixth aspect is performed.

Embodiments of a nineteenth aspect of the present disclosure provide a communication apparatus, which includes a processor and a memory, and a computer program is stored in the memory. The processor is configured to execute the computer program stored in the memory, to cause the communication apparatus to perform the method described in the first aspect.

Embodiments of a twentieth aspect of the present disclosure provide another communication apparatus, which includes a processor and a memory, and a computer program is stored in the memory. The processor is configured to execute the computer program stored in the memory, to cause the communication apparatus to perform the method described in the second aspect.

Embodiments of a twenty-first aspect of the present disclosure provide another communication apparatus, which includes a processor and a memory, and a computer program is stored in the memory. The processor is configured to execute the computer program stored in the memory, to cause the communication apparatus to perform the method described in the third aspect.

Embodiments of a twenty-second aspect of the present disclosure provide another communication apparatus, which includes a processor and a memory, and a computer program is stored in the memory. The processor is configured to execute the computer program stored in the memory, to cause the communication apparatus to execute the method described in the fourth aspect.

Embodiments of a twenty-third aspect of the present disclosure provide another communication apparatus, which includes a processor and a memory, and a computer program is stored in the memory. The processor is configured to execute the computer program stored in the memory, to cause the communication apparatus to perform the method described in the fifth aspect.

Embodiments of a twenty-fourth aspect of the present disclosure provide another communication apparatus, which includes a processor and a memory, and a computer program is stored in the memory. The processor is configured to execute the computer program stored in the memory, to cause the communication apparatus to perform the method described in the sixth aspect.

Embodiments of a twenty-fifth aspect of the present disclosure provide another communication apparatus, which includes a processor and an interface circuit, the interface circuit is configured to receive code instructions and transmit them to the processor, and the processor is configured to run the code instructions to cause the apparatus to perform the method described in the first aspect.

Embodiments of a twenty-sixth aspect of the present disclosure provide another communication apparatus, which includes a processor and an interface circuit, the interface circuit is configured to receive code instructions and transmit them to the processor, and the processor is configured to run the code instructions to cause the apparatus to perform the method described in the second aspect.

Embodiments of a twenty-seventh aspect of the present disclosure provide another communication apparatus, which includes a processor and an interface circuit, the interface circuit is configured to receive code instructions and transmit them to the processor, and the processor is configured to run the code instructions to cause the apparatus to perform the method described in the third aspect.

Embodiments of a twenty-eighth aspect of the present disclosure provides another communication apparatus, which includes a processor and an interface circuit, the interface circuit is configured to receive code instructions and transmit them to the processor, and the processor is configured to run the code instructions to cause the apparatus to perform the method described in the fourth aspect.

Embodiments of a twenty-ninth aspect of the present disclosure provide another communication apparatus, which includes a processor and an interface circuit, the interface circuit is configured to receive code instructions and transmit them to the processor, and the processor is configured to run the code instructions to cause the apparatus to perform the method described in the fifth aspect.

Embodiments of a thirtieth aspect of the present disclosure provide another communication apparatus, which includes a processor and an interface circuit, the interface circuit is configured to receive code instructions and transmit them to the processor, and the processor is configured to run the code instructions to cause the apparatus to perform the method described in the sixth aspect.

Embodiments of a thirty-first aspect of the present disclosure provide a system for configuring a mapping relationship between a bearer identifier and an egress PC5 RLC channel, which includes the communication apparatus described in the seventh aspect and the communication apparatus described in the eighth aspect, or the system includes the communication apparatus described in the seventh aspect and the communication apparatus described in the ninth aspect, or the system includes the communication apparatus described in the tenth aspect and the communication apparatus described in the twelfth aspect, or the system includes the communication apparatus described in the thirteenth aspect and the communication apparatus described in the fourteenth aspect.

Embodiments of a thirty-second aspect of the present disclosure provide a computer-readable storage medium for storing instructions for the above communication apparatus, which, when executed, cause the communication apparatus to perform the method described in the first aspect.

Embodiments of a thirty-third aspect of the present disclosure provide another computer-readable storage medium for storing instructions for the above communication apparatus, which, when executed, cause the communication apparatus to perform the method described in the second aspect.

Embodiments of a thirty-fourth aspect of the present disclosure provide another computer-readable storage medium for storing instructions for the above communication apparatus, which, when executed, cause the communication apparatus to perform the method described in the third aspect.

Embodiments of a thirty-fifth aspect of the present disclosure provide another computer-readable storage medium for storing instructions for the above communication apparatus, which, when executed, cause the communication apparatus to perform the method described in the fourth aspect.

Embodiments of a thirty-sixth aspect of the present disclosure provide another computer-readable storage medium for storing instructions for the above communication apparatus, which, when executed, cause the communication apparatus to perform the method described in the fifth aspect.

Embodiments of a thirty-seventh aspect of the present disclosure provide another computer-readable storage medium for storing instructions for the above communication apparatus, which, when executed, cause the communication apparatus to perform the method described in the sixth aspect.

Embodiments of a thirty-eighth aspect of the present disclosure further provide a computer program product including a computer program, which, when run on a computer, causes the computer to perform the method described in the first aspect.

Embodiments of a thirty-ninth aspect of the present disclosure further provide another computer program product including a computer program, which, when run on a computer, causes the computer to perform the method described in the second aspect.

Embodiments of a fortieth aspect of the present disclosure further provide a computer program product including a computer program, which, when run on a computer, causes the computer to perform the method described in the third aspect.

Embodiments of a forty-first aspect of the present disclosure further provide another computer program product including a computer program, which, when run on a computer, causes the computer to perform the method described in the fourth aspect.

Embodiments of a forty-second aspect of the present disclosure further provide a computer program product including a computer program, which, when run on a computer, causes the computer to perform the method described in the fifth aspect.

Embodiments of a forty-third aspect of the present disclosure further provide another computer program product including a computer program, which, when run on a computer, causes the computer to perform the method described in the sixth aspect.

Embodiments of a forty-fourth aspect of the present disclosure provide a chip system, which includes at least one processor and an interface, for supporting a communication apparatus to realize the functions related to the first aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a forty-fifth aspect of the present disclosure further provide another chip system, which includes at least one processor and an interface, for supporting a communication apparatus to realize the functions related to the second aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a forty-sixth aspect of the present disclosure further provide another chip system, which includes at least one processor and an interface, for supporting a communication apparatus to realize the functions related to the third aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a forty-seventh aspect of the present disclosure also provide another chip system, which includes at least one processor and an interface, for supporting a communication apparatus to realize the functions related to the fourth aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a forty-eighth aspect of the present disclosure further provide another chip system, which includes at least one processor and an interface, for supporting a communication apparatus to realize the functions related to the fifth aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a forty-ninth aspect of the present disclosure further provide another chip system, which includes at least one processor and an interface, for supporting a communication apparatus to realize the functions related to the sixth aspect, for example, determining or processing at least one of data and information related to the above method. In a possible design, the chip system further includes a memory for storing computer programs and data necessary for the communication apparatus. The chip system may include chips, and may also include chips and other discrete devices.

Embodiments of a fiftieth aspect of the present disclosure further provide a computer program which, when run on a computer, causes the computer to perform the method described in the first aspect.

Embodiments of a fifty-first aspect of the present disclosure further provide another computer program, which, when run on a computer, causes the computer to perform the method described in the second aspect.

Embodiments of a fifty-second aspect of the present disclosure further provides another computer program which, when run on a computer, causes the computer to perform the method described in the third aspect.

Embodiments of a fifty-third aspect of the present disclosure further provides another computer program, which, when run on a computer, causes the computer to perform the method described in the fourth aspect.

Embodiments of a fifty-fourth aspect of the present disclosure further provides another computer program, which, when run on a computer, causes the computer to perform the method described in the fifth aspect.

Embodiments of a fifty-fifth aspect of the present disclosure further provide another computer program, which, when run on a computer, causes the computer to perform the method described in the sixth aspect.

### BRIEF DESCRIPTION OF THE DRAWINGS

In order to more clearly explain technical schemes in embodiments of the present disclosure or in the related art, accompanying drawings needed to be used in the embodiments of the present disclosure or in the related art will be explained below.
Fig. 1 is a schematic architecture diagram of a communication system provided by an embodiment of the present disclosure.
Fig. 2 is a flow chart of a method for configuring a mapping relationship between a bearer identifier and an egress PC5 RLC channel provided by an embodiment of the present disclosure.
Fig. 3 is a flow chart of another method for configuring a mapping relationship between a bearer identifier and an egress PC5 RLC channel provided by an embodiment of the present disclosure.
Fig. 4 is a flow chart of another method for configuring a mapping relationship between a bearer identifier and an egress PC5 RLC channel provided by an embodiment of the present disclosure.
Fig. 5 is a flow chart of another method for configuring a mapping relationship between a bearer identifier and an egress PC5 RLC channel provided by an embodiment of the present disclosure.
Fig. 6 is a flow chart of another method for configuring a mapping relationship between a bearer identifier and an egress PC5 RLC channel provided by an embodiment of the present disclosure.
Fig. 7 is a flow chart of another method for configuring a mapping relationship between a bearer identifier and an egress PC5 RLC channel provided by an embodiment of the present disclosure.
Fig. 8 is a flow chart of another method for configuring a mapping relationship between a bearer identifier and an egress PC5 RLC channel provided by an embodiment of the present disclosure.
Fig. 9 is a flow chart of another method for configuring a mapping relationship between a bearer identifier and an egress PC5 RLC channel provided by an embodiment of the present disclosure.
Fig. 10 is a flow chart of another method for configuring a mapping relationship between a bearer identifier and an egress PC5 RLC channel provided by an embodiment of the present disclosure.
Fig. 11 is a flow chart of another method for configuring a mapping relationship between a bearer identifier and an egress PC5 RLC channel provided by an embodiment of the present disclosure.
Fig. 12 is a schematic diagram of a communication apparatus provided by an embodiment of the present disclosure.
Fig. 13 is a schematic diagram of another communication apparatus provided by an embodiment of the present disclosure.
Fig. 14 is a schematic diagram of a chip provided by an embodiment of the present disclosure.

### DETAILED DESCRIPTION

In order to better understand a method for configuring a mapping relationship between a bearer identifier and an egress PC5 RLC channel disclosed in embodiments of the present disclosure, a communication system to which the embodiments of the present disclosure applies will be described first.

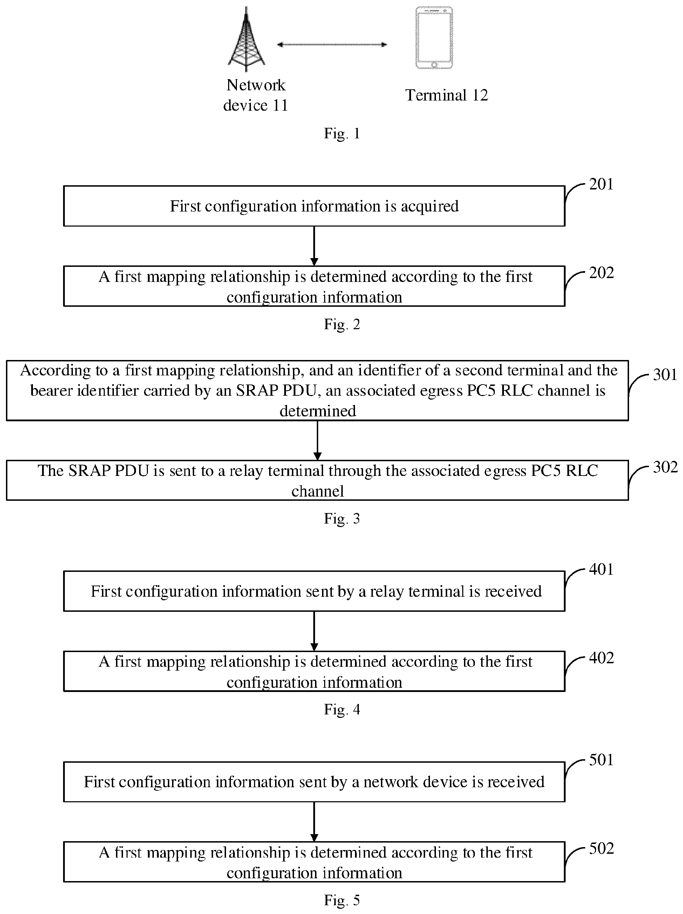

Referring to Fig. 1, Fig. 1 is a schematic architecture diagram of a communication system provided by an embodiment of the present disclosure. The communication system may include, but is not limited to, one network device and one terminal. The number and form of devices shown in Fig. 1 are only for example and do not constitute a limitation to the embodiments of the present disclosure. In practical applications, two or more network devices and two or more terminals may be included. The communication system shown in Fig. 1 includes one network device 11 and one terminal 12 as an example.

It should be noted that the technical scheme of the embodiments of the present disclosure may be applied to various communication systems, such as a long term evolution (LTE) system, a 5th generation (5G) mobile communication system, a 5G new radio (NR) system, or other new mobile communication systems in the future.

The network device 11 in the embodiments of the present disclosure is an entity on a network side for transmitting or receiving signals. For example, the network device 11 may be an evolved NodeB (eNB), a transmission reception point (TRP), a next generation NodeB (gNB) in the NR system, a base station in other future mobile communication systems or an access node in a wireless fidelity (WiFi) system. The embodiments of the present disclosure do not limit the specific technology and the specific equipment form adopted by the network device. The network device provided by the embodiments of the present disclosure may be composed of a central unit (CU) and a distributed unit (DU), in which the CU may also be called a control unit. With the CU-DU structure, protocol layers of the network device, such as the base station, may be separated, and functions of some protocol layers are centrally controlled by the CU, while functions of some or all of the remaining protocol layers are distributed in the DU, and the DU is centrally controlled by the CU.

The terminal 12 in the embodiments of the present disclosure is an entity on a user side for receiving or transmitting signals, such as a mobile phone. The terminal may also be called a terminal device, user equipment (UE), a mobile station (MS), a mobile terminal (MT) and so on. The terminal may be a vehicle with a communication function, a smart vehicle, a mobile phone, a wearable device, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The embodiments of the present disclosure do not limit the specific technology and the specific equipment form adopted by the terminal.

It may be understood that the communication system described in the embodiments of the present disclosure is for more clearly explaining the technical scheme of the embodiments of the present disclosure, and does not constitute a limitation to the technical scheme provided by the embodiments of the present disclosure. Those skilled in the art may know that with the evolution of the system architecture and the emergence of new business scenarios, the technical scheme provided by the embodiments of the present disclosure is also applicable to similar technical problems.

In the related art, in order to support direct communication between terminals, a sidelink communication method is introduced. A terminal A may not directly communicate with a terminal B, but through relay of a terminal C. The terminal A and the terminal B may be called remote terminals, the terminal C providing a relay function is a relay terminal, and all terminals communicate through sidelink unicast. This architecture is called U2U relay. In a U2U scenario, how to configure a mapping relationship between a bearer identifier and an egress PC5 RLC channel for the remote terminal and the relay terminal is an urgent problem to be solved.

In the following, a method and an apparatus for configuring a mapping relationship between a bearer identifier and an egress PC5 RLC channel provided by the present disclosure will be introduced in detail with reference to the attached drawings.

Referring to Fig. 2, Fig. 2 is a flow chart of a method for configuring a mapping relationship between a bearer identifier and an egress PC5 RLC channel provided by an embodiment of the present disclosure, and the method is performed by a first terminal. As shown in Fig. 2, the method may include, but is not limited to, the following steps.

In step 201, first configuration information is acquired.

In the present disclosure, the first terminal may acquire the first configuration information sent by a relay terminal or the first configuration information sent by a network device. The first configuration information may be configured to configure a mapping relationship among an identifier of a second terminal, the bearer identifier and the egress PC5 RLC channel to the first terminal.

In the present disclosure, the first terminal and the second terminal may communicate through the relay terminal.

In step 202, a first mapping relationship is determined according to the first configuration information.

In the present disclosure, the first configuration information may carry the first mapping relationship, and the first mapping relationship may refer to the mapping relationship among the identifier of the second terminal, the bearer identifier and the egress PC5 RLC channel. Thus, the first terminal may determine the first mapping relationship according to the first configuration information.

Optionally, the first mapping relationship may also be pre-configured.

In the present disclosure, the first mapping relationship may be in the form of a list, such as Table 1 below. Table 1 shows a first mapping relationship corresponding to a certain first terminal.

**Table 1**

| | | |
|---|---|---|
| Second terminal B1 | Bearer C1 | Egress PC RLC channel 1 |
| Second terminal B1 | Bearer C2 | Egress PC RLC channel 2 |
| Second terminal B2 | Bearer C1 | Egress PC RLC channel 3 |
| ...... | ...... | ...... |

In table 1, B1 and B2 represent the identifier of the second terminal, and C1, C2 and C3 represent the bearer identifier.

In the present disclosure, the identifier of the second terminal in the first mapping relationship may be one or more, and one second terminal identifier may correspond to one or more bearer identifiers, which is not limited in the present disclosure.

In this embodiment of the present disclosure, the first terminal may acquire the first configuration information and determine the first mapping relationship according to the first configuration information. Therefore, the mapping relationship among the identifier of the second terminal, the bearer identifier and the egress PC5 RLC channel may be configured to the first terminal.

Referring to Fig. 3, Fig. 3 is a flow chart of another method for configuring a mapping relationship between a bearer identifier and an egress PC5 RLC channel provided by an embodiment of the present disclosure, and the method is performed by a first terminal. As shown in Fig. 3, the method may further include, but not limited to, the following steps.

In step 301, according to a first mapping relationship, and an identifier of a second terminal and the bearer identifier carried by an SRAP PDU, an associated egress PC5 RLC channel is determined.

The explanation of the first mapping relationship may be found in the above embodiment, and thus is not repeated here.

In the present disclosure, the first mapping relationship may be configured by a network device or a relay terminal, or may be pre-configured, which is not limited in the present disclosure.

In the present disclosure, the first terminal may communicate with the second terminal through the relay terminal.

In the present disclosure, taking the first terminal being a source remote terminal and the second terminal being a target remote terminal as an example, the SRAP PDU of the first terminal may carry the identifier of the second terminal and the bearer identifier, and the first terminal may query the first mapping relationship according to the identifier of the second terminal and the bearer identifier carried in the SRAP PDU, to determine the egress PC5 RLC channel corresponding to the identifier of the second terminal and the bearer identifier, that is, the associated egress PC5 RLC channel.

In step 302, the SRAP PDU is sent to a relay terminal through the associated egress PC5 RLC channel.

In the present disclosure, the first terminal may send the SRAP PDU to the associated egress PC5 RLC channel, and then send it to the relay terminal.

In the present disclosure, the identifier of the second terminal may be associated with a source layer 2 address (Source L2 ID) of the second terminal, so that the first terminal may send the SRAP PDU to a corresponding second terminal through the relay terminal.

In this embodiment of the present disclosure, the first terminal may determine the associated egress PC5 RLC channel according to the first mapping relationship, and the identifier of the second terminal and the bearer identifier carried by the SRAP PDU, and send the SRAP PDU to the relay terminal through the associated egress PC5 RLC channel. Therefore, the first terminal may use the first mapping relationship to determine the egress PC5 RLC channel used for sending the SRAP PDU.

Referring to Fig. 4, Fig. 4 is a flow chart of another method for configuring a mapping relationship between a bearer identifier and an egress PC5 RLC channel provided by an embodiment of the present disclosure, and this method is performed by a first terminal. As shown in Fig. 4, the method may include, but is not limited to, the following steps.

In step 401, first configuration information sent by a relay terminal is received.

The first configuration information may be configured to configure a first mapping relationship to the first terminal, and the explanation of the first mapping relationship may be found in the above embodiment, which thus is not repeated here.

In the present disclosure, the first terminal may receive a PC5 media access control control element (MAC CE) sent by the relay terminal, and the PC5 MAC CE may carry the first configuration information. Then, the first terminal may determine the first configuration information according to the PC5 MAC CE.

In the present disclosure, the first terminal may also receive a PC5 radio resource control (PC5-RRC) signaling sent by the relay terminal, and the PC5-RRC signaling may carry the first configuration information. Then, the first terminal may determine the first configuration information according to the PC5-RRC signaling. The PC5-RRC signaling may be a RRCReconfigurationSidelink signaling.

In step 402, a first mapping relationship is determined according to the first configuration information.

In the present disclosure, step 402 may be implemented in any manner of the embodiments of the present disclosure, which is not limited in this embodiment of the present disclosure, and thus is not repeated here.

In this embodiment of the present disclosure, the first terminal may receive the first configuration information sent by the relay terminal, and determine the first mapping relationship according to the first configuration information. Therefore, the first terminal may receive a mapping relationship among an identifier of a second terminal, the bearer identifier and the egress PC5 RLC channel configured by the relay terminal.

Referring to Fig. 5, Fig. 5 is a flow chart of another method for configuring a mapping relationship between a bearer identifier and an egress PC5 RLC channel provided by an embodiment of the present disclosure, and this method is performed by a first terminal. As shown in Fig. 5, the method may include, but is not limited to, the following steps.

In step 501, first configuration information sent by a network device is received.

In the present disclosure, the first terminal may receive the first configuration information sent by the network device, and the first configuration information is configured to configure a first mapping relationship to the first terminal.

The explanation of the first mapping relationship may be found in the above embodiment, and thus is not repeated here.

In the present disclosure, the first terminal may receive a dedicated RRC signaling sent by the network device, and the dedicated RRC signaling may carry the first configuration information. Then, the first terminal may determine the first configuration information according to the dedicated RRC signaling.

In the present disclosure, the first terminal may also receive system information block (SIB) information sent by the network device, and the SIB information may carry the first configuration information. Then, the first terminal may determine the first configuration information according to the SIB information.

In step 502, a first mapping relationship is determined according to the first configuration information.

In the present disclosure, step 502 may be implemented in any manner of the embodiments of the present disclosure, which is not limited in this embodiment of the present disclosure, and thus is not repeated here.

In this embodiment of the present disclosure, the first terminal may receive the first configuration information sent by the network device, and determine the first mapping relationship according to the first configuration information. Thus, the first terminal may receive a mapping relationship among an identifier of a second terminal, the bearer identifier and the egress PC5 RLC channel configured by the network device.

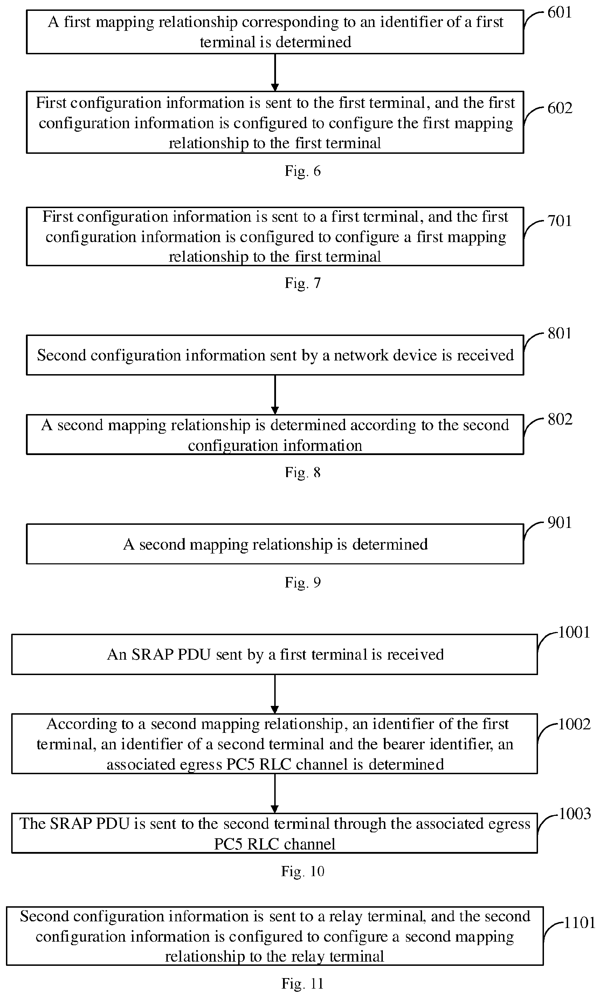

Referring to Fig. 6, Fig. 6 is a flow chart of another method for configuring a mapping relationship between a bearer identifier and an egress PC5 RLC channel provided by an embodiment of the present disclosure, and this method is performed by a relay terminal. As shown in Fig. 6, the method may include, but is not limited to, the following steps.

In step 601, a first mapping relationship corresponding to an identifier of a first terminal is determined.

The explanation of the first mapping relationship may be found in the above embodiment, and thus is not repeated here.

In the present disclosure, the relay terminal may determine the first mapping relationships corresponding to identifiers of a plurality of first terminals. For example, for first terminals a and b, the relay terminal may determine the first mapping relationship corresponding to the first terminal a and the first mapping relationship corresponding to the first terminal b. Both the first terminals a and b may communicate with other terminals through the relay terminal.

In step 602, first configuration information is sent to the first terminal, and the first configuration information is configured to configure the first mapping relationship to the first terminal.

In the present disclosure, the relay terminal may send a PC5 MAC CE to the first terminal, and the PC5 MAC CE carries the first configuration information. Alternatively, the relay terminal may also send a PC5-RRC signaling to the first terminal, the PC5-RRC signaling carries the first configuration information, and the PC5-RRC signaling may be a RRCReconfigurationSidelink signaling. That is, the relay terminal may configure the first mapping relationship to the first terminal through the PC5 MAC CE or the PC5-RRC signaling.

Optionally, in a case that there are a plurality of first terminals, the relay terminal may configure a corresponding first mapping relationship to each first terminal.

For example, in a case that the relay terminal determines the first mapping relationship corresponding to the first terminal a and the first mapping relationship corresponding to the first terminal b, the relay terminal may send the corresponding first mapping relationship to the first terminal a and send the corresponding first mapping relationship to the first terminal b. Both the first terminals a and b may communicate with other terminals through the relay terminal.

In this embodiment of the present disclosure, the relay terminal may determine the first mapping relationship corresponding to the identifier of the first terminal, and send the first configuration information to the first terminal, to configure the first mapping relationship to the first terminal. Therefore, the relay terminal may configure a mapping relationship among an identifier of a second terminal, the bearer identifier and the egress PC5 RLC channel to the first terminal.

Referring to Fig. 7, Fig. 7 is a flow chart of another method for configuring a mapping relationship between a bearer identifier and an egress PC5 RLC channel provided by an embodiment of the present disclosure, and this method is performed by a network device. As shown in Fig. 7, the method may include, but is not limited to, a following step.

In step 701, first configuration information is sent to a first terminal, and the first configuration information is configured to configure a first mapping relationship to the first terminal.

The explanation of the first mapping relationship may be found in the above embodiment, and thus is not repeated here.

In the present disclosure, in a case that the first terminal is within the coverage range of the network device, the network device may send a dedicated RRC signaling to the first terminal, and the dedicated RRC signaling may carry the first configuration information. Alternatively, the network device may also send SIB information to the first terminal, and the SIB information may carry the first configuration information. That is, the network device may configure a mapping relationship among an identifier of a second terminal, the bearer identifier and the egress PC5 RLC channel to the first terminal through the dedicated RRC signaling or the SIB information.

Alternatively, in a case that there are a plurality of first terminals, the network device may configure a corresponding first mapping relationship to each first terminal.

Referring to Fig. 8, Fig. 8 is a flow chart of another method for configuring a mapping relationship between a bearer identifier and an egress PC5 RLC channel provided by an embodiment of the present disclosure, and this method is performed by a relay terminal. As shown in Fig. 8, the method may include, but is not limited to, the following steps.

In step 801, second configuration information sent by a network device is received.

In the present disclosure, the relay terminal may receive the second configuration information sent by the network device. The second configuration information may be configured to configure a second mapping relationship to the relay terminal.

The second mapping relationship may refer to a mapping relationship among an identifier of a first terminal, an identifier of a second terminal, the bearer identifier and the egress PC5 RLC channel.

In the present disclosure, the first terminal may communicate with the second terminal through the relay terminal, and the first terminal may be a source remote terminal and the second terminal may a target remote terminal, or the second terminal may a source remote terminal and the first terminal may a target remote terminal.

In the present disclosure, the second mapping relationship may include one or more first terminal identifiers and one or more second terminal identifiers, which is not limited in the present disclosure.

In the present disclosure, one first terminal identifier may correspond to one or more second terminal identifiers in the second mapping relationship.

In the present disclosure, the second mapping relationship may be in the form of a list, such as Table 2 below.

**Table 2**

| | | | |
|---|---|---|---|
| First terminal A1 | Second terminal B1 | Bearer C1 | Egress PC RLC channel 1 |
| First terminal A1 | Second terminal B1 | Bearer C2 | Egress PC RLC channel 2 |
| First terminal A1 | Second terminal B2 | Bearer C1 | Egress PC RLC channel 3 |
| First terminal A2 | Second terminal B1 | Bearer C1 | Egress PC RLC channel 1 |
| First terminal A3 | Second terminal B3 | Bearer C1 | Egress PC RLC channel 2 |
| ...... | ...... | ...... | ...... |

In Table 2, A1, A2 and A3 represent the identifiers of the first terminals; B1, B2 and B3 represent the identifiers of the second terminals; and C1 and C2 represent the bearer identifiers.

In step 802, a second mapping relationship is determined according to the second configuration information.

In the present disclosure, the relay terminal may determine the second mapping relationship according to the second configuration information sent by the network device.

Optionally, the second mapping relationship may also be pre-configured.

In this embodiment of the present disclosure, the relay terminal may receive the second configuration information sent by the receiving network device and determine the second mapping relationship according to the second configuration information. Therefore, the relay terminal may acquire the mapping relationship among the identifier of the first terminal, the identifier of the second terminal, the bearer identifier and the egress PC5 RLC channel configured by the network device.

Referring to Fig. 9, Fig. 9 is a flow chart of another method for configuring a mapping relationship between a bearer identifier and an egress PC5 RLC channel provided by an embodiment of the present disclosure, and this method is performed by a relay terminal. As shown in Fig. 9, the method may include, but is not limited to, a following step.

In step 901, a second mapping relationship is determined.

In the present disclosure, the relay terminal may determine the second mapping relationship by itself. The second mapping relationship may refer to a mapping relationship among an identifier of a first terminal, an identifier of a second terminal, the bearer identifier and the egress PC5 RLC channel.

Based on the above embodiments, it may be seen that the second mapping relationship in the relay terminal may be configured by the network device, determined by itself or pre-configured.

Referring to Fig. 10, Fig. 10 is a flow chart of another method for configuring a mapping relationship between a bearer identifier and an egress PC5 RLC channel provided by an embodiment of the present disclosure, and this method is performed by a relay terminal. As shown in Fig. 10, the method may further include, but is not limited to, the following steps.

In step 1001, an SRAP PDU sent by a first terminal is received.

In the present disclosure, the first terminal may communicate with a second terminal through the relay terminal.

In the present disclosure, the relay terminal may receive the SRAP PDU sent by the first terminal, and the SRAP PDU may carry an identifier of a second terminal and the bearer identifier, or the SRAP PDU may carry an identifier of the first terminal, an identifier of a second terminal and the bearer identifier, which is not limited in the present disclosure.

In step 1002, according to a second mapping relationship, an identifier of the first terminal, an identifier of a second terminal and the bearer identifier, an associated egress PC5 RLC channel is determined.

The second mapping relationship may be configured by a network device, determined by the relay terminal itself, or pre-configured, which is not limited in the present disclosure.

In the present disclosure, according to the identifier of the first terminal, the identifier of the second terminal and the bearer identifier, the second mapping relationship may be queried to determine the egress PC5 RLC channel corresponding to the identifier of the first terminal, the identifier of the second terminal and the bearer identifier, that is, to determine the associated egress PC5 RLC channel.

In step 1003, the SRAP PDU is sent to the second terminal through the associated egress PC5 RLC channel.

In the present disclosure, the relay terminal may send the SRAP PDU to the associated egress PC5 RLC channel, and then send it to the second terminal.

In the present disclosure, the identifier of the first terminal may be associated with a source layer 2 address of the first terminal, and the identifier of the second terminal may be associated with a source layer 2 address of the second terminal. Therefore, the first terminal may send the SRAP PDU to a corresponding second terminal through the relay terminal.

In this embodiment of the present disclosure, after receiving the SRAP PDU sent by the first terminal, the relay terminal may determine the egress PC5 RLC channel used for sending the SRAP PDU based on the second mapping relationship, the identifier of the first terminal, the identifier of the second terminal and the bearer identifier, so as to send the SRAP PDU to the second terminal.

Referring to Fig. 11, Fig. 11 is a flow chart of another method for configuring a mapping relationship between a bearer identifier and an egress PC5 RLC channel provided by an embodiment of the present disclosure, and this method is performed by a network device. As shown in Fig. 11, the method may include, but is not limited to, a following step.

In step 1101, second configuration information is sent to a relay terminal, and the second configuration information is configured to configure a second mapping relationship to the relay terminal.

The explanation of the second mapping relationship may be found in the above embodiment, and thus is not repeated here.

In the present disclosure, in a case that the relay terminal is within the coverage range of the network device, the network device may send a dedicated RRC signaling to the relay terminal, and the dedicated RRC signaling may carry the second configuration information. Alternatively, the network device may also send SIB information to the relay terminal, and the SIB information may carry the second configuration information. That is, the network device may configure the second mapping relationship for the relay terminal through the dedicated RRC signaling or the SIB information.

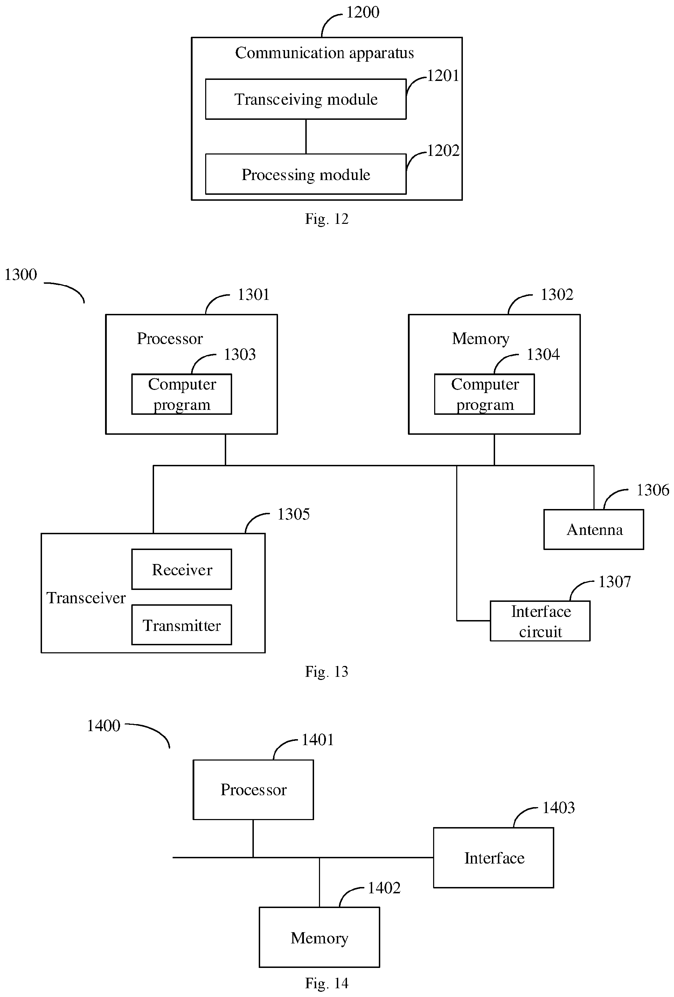

Referring to Fig. 12, Fig. 12 is a schematic diagram of a communication apparatus provided by an embodiment of the present disclosure. A communication apparatus 1200 shown in Fig. 12 may include a transceiving module 1201 and a processing module 1202. The transceiving module 1201 may include a transmitting module and/or a receiving module, the transmitting module is used for realizing a transmitting function and the receiving module is used for realizing a receiving function, so that the transceiving module 1201 may realize the transmitting function and/or the receiving function.

It may be understood that the communication apparatus 1200 may be a first terminal, an apparatus in the first terminal, or an apparatus that may be used in match with the first terminal.

The communication apparatus 1200 is on a side of the first terminal.

The transceiving module is configured to acquire first configuration information.

The processing module is configured to determine a first mapping relationship according to the first configuration information, and the first mapping relationship refers to a mapping relationship among an identifier of a second terminal, a bearer identifier and an egress PC5 RLC channel.

Optionally, the processing module 1202 is further configured to:
according to the first mapping relationship, and the identifier of the second terminal and the bearer identifier carried by a sidelink relay adaptation protocol protocol data unit (SRAP PDU), determine an associated egress PC5 RLC channel.

The transceiving module 1201 is further configured to send the SRAP PDU to a relay terminal through the associated egress PC5 RLC channel, and the first terminal communicates with the second terminal through the relay terminal.

Optionally, the transceiving module 1201 is configured to:
receive the first configuration information sent by the relay terminal.

Optionally, the transceiving module 1201 is configured to:
receive a PC5 MAC CE sent by the relay terminal; and
determine the first configuration information according to the PC5 MAC CE.

Optionally, the transceiving module 1201 is configured to:
receive a PC5 radio resource control (PC5-RRC) signaling sent by the relay terminal; and
determine the first configuration information according to the PC5-RRC signaling.

Optionally, the transceiving module 1201 is configured to:
receive the first configuration information sent by a network device.

Optionally, the transceiving module 1201 is configured to:
receive a dedicated RRC signaling sent by the network device; and
determine the first configuration information according to the dedicated RRC signaling.

Optionally, the transceiving module 1201 is configured to:
receive system information block (SIB) information sent by the network device; and
determine the first configuration information according to the SIB information.

Optionally, the identifier of the second terminal is associated with a source layer 2 address of the second terminal.

In the present disclosure, the first terminal may acquire first configuration information and determine the first mapping relationship according to the first configuration information. Therefore, the mapping relationship among the identifier of the second terminal, the bearer identifier and the egress PC5 RLC channel may be configured to the first terminal.

It may be understood that the communication apparatus 1200 may be a relay terminal, an apparatus in a relay terminal, or an apparatus that may be used in match with a relay terminal.

The communication apparatus 1200 is on a side of the relay terminal.

The processing module 1202 is configured to determine a first mapping relationship corresponding to an identifier of a first terminal, and the first mapping relationship refers to a mapping relationship among an identifier of a second terminal, a bearer identifier and an egress PC5 RLC channel.

The transceiving module 1201 is configured to send first configuration information to the first terminal, and the first configuration information is configured to configure the first mapping relationship to the first terminal.

Optionally, the transceiving module 1201 is configured to:
send a PC5 MAC CE to the first terminal, in which the PC5 MAC CE carries the first configuration information.

Optionally, the transceiving module 1201 is configured to:
send a PC5-RRC signaling to the first terminal, in which the PC5-RRC signaling carries the first configuration information.

In the present disclosure, the relay terminal may determine the first mapping relationship corresponding to the identifier of the first terminal, and send the first configuration information to the first terminal, to configure the first mapping relationship to the first terminal. Therefore, the relay terminal may configure the mapping relationship among the identifier of the second terminal, the bearer identifier and the egress PC5 RLC channel to the first terminal.

It may be understood that the communication apparatus 1200 may be a network device, an apparatus in a network device, or an apparatus that may be used in match with a network device.

The communication apparatus 1200 is on a side of the network device.

The transceiving module 1201 is configured to send first configuration information to a first terminal, in which the first configuration information is configured to configure a first mapping relationship to the first terminal, and the first mapping relationship refers to a mapping relationship between an identifier of a second terminal, a bearer identifier and an egress PC5 RLC channel.

Optionally, the transceiving module 1201 is configured to:
send a dedicated RRC signaling to the first terminal, in which the dedicated RRC signaling carries the first configuration information.

Optionally, the transceiving module 1201 is configured to:
send SIB information to the first terminal, in which the SIB information carries the first configuration information.

In the present disclosure, the network device may send the first configuration information to the first terminal, to configure the mapping relationship among the identifier of the second terminal, the bearer identifier and the egress PC5 RLC channel to the first terminal.

It may be understood that the communication apparatus 1200 may be a network device, an apparatus in a network device, or an apparatus that may be used in match with a network device.

The communication apparatus 1200 is on the side of the network device.

It may be understood that the communication apparatus 1200 may be a relay terminal, an apparatus in a relay terminal, or an apparatus that may be used in match with a relay terminal.

The communication apparatus 1200 is on the side of the relay terminal.

The transceiving module 1201 is configured to receive second configuration information sent by a network device.

The processing module 1202 is configured to determine a second mapping relationship according to the second configuration information, in which the second mapping relationship refers to a mapping relationship between an identifier of a first terminal, an identifier of a second terminal, a bearer identifier and an egress PC5 RLC channel.

Optionally, the transceiving module 1201 is configured to:
receive a dedicated RRC signaling sent by the network device; and
determine the second configuration information according to the dedicated RRC signaling.

Optionally, the transceiving module 1201 is configured to:
receive system information block (SIB) information sent by the network device; and
determine the second configuration information according to the SIB information.

Optionally, the transceiving module 1201 is further configured to receive an SRAP PDU sent by the first terminal.

The processing module 1202 is further configured to determine an associated egress PC5 RLC channel according to the second mapping relationship, the identifier of the first terminal, the identifier of the second terminal and the bearer identifier.

The transceiving module 1201 is further configured to send the SRAP PDU to the second terminal through the associated egress PC5 RLC channel, in which the first terminal communicates with the second terminal through the relay terminal.

Optionally, the identifier of the first terminal is associated with a source layer 2 address of the first terminal, and the identifier of the second terminal is associated with a source layer 2 address of the second terminal.

In the present disclosure, the relay terminal may receive the second configuration information sent by the network device, and determine the second mapping relationship according to the second configuration information. Therefore, the relay terminal may acquire the mapping relationship among the identifier of the first terminal, the identifier of the second terminal, the bearer identifier and the egress PC5 RLC channel configured by the network device.

It may be understood that the communication apparatus 1200 may be a relay terminal, an apparatus in a relay terminal, or an apparatus that may be used in match with a relay terminal.

The communication apparatus 1200 is on the side of the relay terminal.

The processing module 1202 is configured to determine a second mapping relationship, in which the second mapping relationship refers to a mapping relationship among an identifier of a first terminal, an identifier of a second terminal, a bearer identifier and an egress PC5 RLC channel.

Optionally, the transceiving module 1201 is further configured to receive an SRAP PDU sent by the first terminal.

The processing module 1202 is further configured to determine an associated egress PC5 RLC channel according to the second mapping relationship, the identifier of the first terminal, the identifier of the second terminal and the bearer identifier.

The transceiving module 1201 is further configured to send the SRAP PDU to the second terminal through the associated egress PC5 RLC channel, in which the first terminal communicates with the second terminal through the relay terminal.

Optionally, the identifier of the first terminal is associated with a source layer 2 address of the first terminal, and the identification of the second terminal is associated with a source layer 2 address of the second terminal.

It may be understood that the communication apparatus 1200 may be a network device, an apparatus in a network device, or an apparatus that may be used in match with a network device.

The communication apparatus 1200 is on the side of the network device.

It may be understood that the communication apparatus 1200 may be a relay terminal, an apparatus in a relay terminal, or an apparatus that may be used in match with the relay terminal.

The communication apparatus 1200 is on the side of the relay terminal.

The transceiving module 1201 is configured to send first configuration information to a first terminal, in which the first configuration information is configured to configure a first mapping relationship to the first terminal, and the first mapping relationship refers to a mapping relationship among an identifier of a second terminal, a bearer identifier and an egress PC5 RLC channel.

Optionally, the transceiving module 1201 is configured to:
send a dedicated RRC signaling to the first terminal, in which the dedicated RRC signaling carries the first configuration information.

Optionally, the transceiving module 1201 is configured to:
send SIB information to the first terminal, in which the SIB information carries the first configuration information.

In the present disclosure, the network device may send the second configuration information to the second terminal, to configure the mapping relationship among the identifier of the second terminal, the bearer identifier and the egress PC5 RLC channel to the second terminal.

Referring to Fig. 13, Fig. 13 is a schematic diagram of another communication apparatus provided by an embodiment of the present disclosure. In Fig. 13, the communication apparatus 1300 may be a network device, or may be a terminal, or may be a chip, a chip system, or a processor that supports the network device to realize the above methods, or may be a chip, a chip system, or a processor that supports the terminal to realize the above methods. The apparatus may be used to realize the methods described in the above method embodiments, and for details, reference may be made to the descriptions in the above method embodiments.

The communication apparatus 1300 may include one or more processors 1301. The processor 1301 may be a general-purpose processor or a special-purpose processor or the like, such as a baseband processor or a central processor. The baseband processor may be used to process communication protocols and communication data, and the central processor may be used to control communication apparatuses (such as base stations, baseband chips, terminals, terminal chips, DUs or CUs, etc.), execute computer programs, and process data of computer programs.

Optionally, the communication apparatus 1300 may further include one or more memories 1302, on which a computer program 1304 may be stored, and the processor 1301 executes the computer program 1304, so that the communication apparatus 1300 may perform the methods described in the above method embodiments. Optionally, data may also be stored in the memory 1302. The communication apparatus 1300 and the memory 1302 may be arranged separately or integrated together.

Optionally, the communication apparatus 1300 may further include a transceiver 1305 and an antenna 1306. The transceiver 1305 may be called a transceiving unit, a transceiving machine, a transceiving circuit, etc., and is used to realize a transceiving function. The transceiver 1305 may include a receiver and a transmitter, the receiver may be called a receiving machine or a receiving circuit, etc., and is used to realize a receiving function, and the transmitter may be called a transmitting machine or a transmitting circuit, etc., and is used to realize a transmitting function.

Optionally, the communication apparatus 1300 may further include one or more interface circuits 1307. The interface circuit 1307 is used to receive code instructions and transmit them to the processor 1301. The processor 1301 executes the code instructions to cause the communication apparatus 1300 to perform the methods described in the above method embodiments.

In a case that the communication apparatus 1300 is the first terminal, the processor 1301 is used to execute step 202 in Fig. 2, step 301 in Fig. 3, step 402 in Fig. 4, step 502 in Fig. 5, etc. In a case that the communication apparatus 1300 is the relay terminal, the transceiver 1305 is used to execute step 602 in Fig. 6, etc.

In a case that the communication apparatus 1300 is the network device, the transceiver 1305 is used to execute step 701 in Fig. 7.

In an implementation, the processor 1301 may include a transceiver used to realize receiving and transmitting functions. For example, the transceiver may be a transceiving circuit, or an interface, or an interface circuit. The transceiving circuit, interface or interface circuit for realizing the receiving and transmitting functions may be separated or integrated. The transceiving circuit, interface or interface circuit may be used for reading and writing codes/data, or the transceiving circuit, interface or interface circuit may be used for signal transmission or transfer.

In an implementation, the processor 1301 may store a computer program 1303, and the computer program 1303 runs on the processor 1301, to cause the communication apparatus 1300 to perform the methods described in the above method embodiments. The computer program 1303 may be embedded in the processor 1301, in which case, the processor 1301 may be implemented by hardware.

In an implementation, the communication apparatus 1300 may include a circuit, which may realize the transmitting or receiving or communicating functions in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as a complementary metal oxide semiconductor (CMOS), a negative channel metal oxide semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be a network device or a terminal, but the scope of the communication apparatus described in the present disclosure is not limited to this, and the structure of the communication apparatus may not be limited by Fig. 13. The communication apparatus may be a stand-alone device or may be part of a large device. For example, the communication apparatus may be:
(1) an independent integrated circuit IC, or a chip, or a chip system or subsystem;
(2) a set of one or more ICs, optionally, the IC set may also include storage components for storing data and computer programs;
(3) an ASIC, such as a modem;
(4) Modules that may be embedded in other devices;
(5) a receiver, terminal, intelligent terminal, cellular phone, wireless device, handset, mobile unit, vehicle-mounted device, network device, cloud device, artificial intelligence device, etc.
(6) others and so on.

In a case that the communication apparatus may be a chip or a chip system, reference may be made to a schematic diagram of a chip shown in Fig. 14. A chip 1400 shown in Fig. 14 includes a processor 1401 and an interface 1403. One or more processors 1401 may be provided, and a plurality of interfaces 1403 may be provided.

In a case that the chip is used to realize the function of the first terminal in the embodiments of the present disclosure, the interface 1403 is configured to execute step 201 in Fig. 2, step 301 in Fig. 3, step 401 in Fig. 4, step 501 in Fig. 5, etc.

In a case that the chip is used to realize the function of the relay network device in the embodiments of the present disclosure, the interface 1403 is configured to execute step 602 in Fig. 6, etc.

In a case that the chip is used to realize the function of the relay network device in the embodiments of the present disclosure, the interface 1403 is configured to execute step 701 in Fig. 7, etc.

Optionally, the chip 1400 further includes a memory 1202 for storing necessary computer programs and data.

Those skilled in the art may also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but this realization should not be understood as beyond the scope of protection of the embodiments of the present disclosure.

The present disclosure also provides a readable storage medium on which instructions are stored, which, when executed by a computer, realize the functions of any of the above method embodiments.

The present disclosure also provides a computer program product which, when executed by a computer, realizes the functions of any of the above method embodiments.

The above embodiments may be realized in whole or in part by software, hardware, firmware or any combination thereof. When implemented in software, it may be in whole or in part implemented in the form of a computer program product. The computer program product includes one or more computer programs. When the computer program is loaded and executed on a computer, the flows or functions according to the embodiments of the present disclosure are generated in whole or in part. The computer may be a general-purpose computer, a special-purpose computer, a computer network, or other programmable apparatuses. The computer program may be stored in a computer-readable storage medium or transmitted from one computer-readable storage medium to another. For example, the computer program may be transmitted from a website, computer, server or data center to another website, computer, server or data center in a wired (such as a coaxial cable, an optical fiber, a digital subscriber line (DSL)) or wireless (such as infrared, wireless, microwave, etc.) manner. The computer-readable storage medium may be any available medium that a computer may access or a data storage device such as a server, a data center and the like that contains one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

Those ordinary skilled in the art may understand that the first, second, and other numeral numbers involved in the present disclosure are distinguished only for convenience of description, and are not intended to limit the scope of embodiments of the present disclosure, and nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by terms like "first", "second", "third", "A", "B", "C" and "D", etc., and these technical features described with the "first", "second", "third", "A", "B", "C" and "D" have no order of precedence or size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural bodies, classes, heaps, or hash tables may be used.

## Claims

1. A method for configuring a mapping relationship between a bearer identifier and an egress PC5 radio link control (PC5 RLC) channel, performed by a first terminal, and comprising:
acquiring first configuration information; and
determining a first mapping relationship according to the first configuration information, wherein the first mapping relationship refers to a mapping relationship among an identifier of a second terminal, the bearer identifier and the egress PC5 RLC channel.

2. The method according to claim 1, further comprising:
according to the first mapping relationship, and the identifier of the second terminal and the bearer identifier carried by a sidelink relay adaptation protocol protocol data unit (SRAP PDU), determining an associated egress PC5 RLC channel; and
sending the SRAP PDU to a relay terminal through the associated egress PC5 RLC channel, wherein the first terminal communicates with the second terminal through the relay terminal.

3. The method according to claim 1, wherein acquiring the first configuration information comprises:
receiving the first configuration information sent by a relay terminal.

4. The method according to claim 3, wherein receiving the first configuration information sent by the relay terminal comprises:
receiving a PC5 media access control control element (PC5 MAC CE) sent by the relay terminal; and
determining the first configuration information according to the PC5 MAC CE.

5. The method according to claim 3, wherein receiving the first configuration information sent by the relay terminal comprises:
receiving a PC5 radio resource control (PC5-RRC) signaling sent by the relay terminal; and
determining the first configuration information according to the PC5-RRC signaling.

6. The method according to claim 1, wherein acquiring the first configuration information comprises:
receiving the first configuration information sent by a network device.

7. The method according to claim 6, wherein receiving the first configuration information sent by the network device comprises:
receiving a dedicated RRC signaling sent by the network device; and
determining the first configuration information according to the dedicated RRC signaling.

8. The method according to claim 6, wherein receiving the first configuration information sent by the network device comprises:
receiving system information block (SIB) information sent by the network device; and
determining the first configuration information according to the SIB information.

9. The method according to claim 1, wherein the identifier of the second terminal is associated with a source layer 2 address of the second terminal.

10. A method for configuring a mapping relationship between a bearer identifier and an egress PC5 RLC channel, performed by a relay terminal, and comprising:
determining a first mapping relationship corresponding to an identifier of a first terminal, wherein the first mapping relationship refers to a mapping relationship among an identifier of a second terminal, the bearer identifier and the egress PC5 RLC channel; and
sending first configuration information to the first terminal, wherein the first configuration information is configured to configure the first mapping relationship to the first terminal.

11. The method according to claim 10, wherein sending the first configuration information to the first terminal comprises:
sending a PC5 MAC CE to the first terminal, wherein the PC5 MAC CE carries the first configuration information.

12. The method according to claim 10, wherein sending the first configuration information to the first terminal comprises:
sending a PC5-RRC signaling to the first terminal, wherein the PC5-RRC signaling carries the first configuration information.

13. A method for configuring a mapping relationship between a bearer identifier and an egress PC5 RLC channel, performed by a network device, and comprising:
sending first configuration information to a first terminal, wherein the first configuration information is configured to configure a first mapping relationship to the first terminal, and the first mapping relationship refers to a mapping relationship among an identifier of a second terminal, the bearer identifier and the egress PC5 RLC channel.

14. The method according to claim 13, wherein sending the first configuration information to the first terminal comprises:
sending a dedicated RRC signaling to the first terminal, wherein the dedicated RRC signaling carries the first configuration information.

15. The method according to claim 13, wherein sending the first configuration information to the first terminal comprises:
sending SIB information to the first terminal, wherein the SIB information carries the first configuration information.

16. A method for configuring a mapping relationship between a bearer identifier and an egress PC5 RLC channel, performed by a relay terminal, and comprising:
receiving second configuration information sent by a network device; and
determining a second mapping relationship according to the second configuration information, wherein the second mapping relationship refers to a mapping relationship among an identifier of a first terminal, an identifier of a second terminal, the bearer identifier and the egress PC5 RLC channel.

17. The method according to claim 16, wherein receiving the second configuration information sent by the network device comprises:
receiving a dedicated RRC signaling sent by the network device; and
determining the second configuration information according to the dedicated RRC signaling.

18. The method according to claim 16, wherein receiving the second configuration information sent by the network device comprises:
receiving system information block (SIB) information sent by the network device; and
determining the second configuration information according to the SIB information.

19. The method according to any one of claims 16 to 18, further comprising:
receiving an SRAP PDU sent by the first terminal;
determining an associated egress PC5 RLC channel according to the second mapping relationship, the identifier of the first terminal, the identifier of the second terminal and the bearer identifier; and
sending the SRAP PDU to the second terminal through the associated egress PC5 RLC channel, wherein the first terminal communicates with the second terminal through the relay terminal.

20. The method according to any one of claims 16 to 18, wherein the identifier of the first terminal is associated with a source layer 2 address of the first terminal, and the identifier of the second terminal is associated with a source layer 2 address of the second terminal.

21. A method for configuring a mapping relationship between a bearer identifier and an egress PC5 RLC channel, performed by a relay terminal, and comprising:
determining a second mapping relationship, wherein the second mapping relationship refers to a mapping relationship among an identifier of a first terminal, an identifier of a second terminal, the bearer identifier and the egress PC5 RLC channel.

22. The method according to claim 21, further comprising:
receiving an SRAP PDU sent by the first terminal;
determining an associated egress PC5 RLC channel according to the second mapping relationship, the identifier of the first terminal, the identifier of the second terminal and the bearer identifier; and
sending the SRAP PDU to the second terminal through the associated egress PC5 RLC channel, wherein the first terminal communicates with the second terminal through the relay terminal.

23. The method according to claim 21, wherein the identifier of the first terminal is associated with a source layer 2 address of the first terminal, and the identifier of the second terminal is associated with a source layer 2 address of the second terminal.

24. A method for configuring a mapping relationship between a bearer identifier and an egress PC5 RLC channel, performed by a network device, and comprising:
sending second configuration information to a relay terminal, wherein the second configuration information is configured to configure a second mapping relationship to the relay terminal, and the second mapping relationship refers to a mapping relationship among an identifier of a first terminal, an identifier of a second terminal, the bearer identifier and the egress PC5 RLC channel.

25. The method according to claim 24, wherein sending the second configuration information to the relay terminal comprises:
sending a dedicated RRC signaling to the relay terminal, wherein the dedicated RRC signaling carries the second configuration information.

26. The method according to claim 24, wherein sending the second configuration information to the relay terminal comprises:
sending SIB information to the relay terminal, wherein the SIB information carries the second configuration information.

27. A communication apparatus, comprising:
a transceiving module configured to acquire first configuration information; and
a processing module configured to determine a first mapping relationship according to the first configuration information, wherein the first mapping relationship refers to a mapping relationship among an identifier of a second terminal, a bearer identifier and an egress PC5 RLC channel.

28. A communication apparatus, comprising:
a processing module configured to determine a first mapping relationship corresponding to a identifier of a first terminal, wherein the first mapping relationship refers to a mapping relationship among an identifier of a second terminal, a bearer identifier and an egress PC5 RLC channel; and
a transceiving module configured to send first configuration information to the first terminal, wherein the first configuration information is configured to configure the first mapping relationship to the first terminal.

29. A communication apparatus, comprising:
a transceiving module configured to send first configuration information to a first terminal, wherein the first configuration information is configured to configure a first mapping relationship to a first terminal, and the first mapping relationship refers to a mapping relationship among an identifier of a second terminal, a bearer identifier and an egress PC5 RLC channel.

30. A communication apparatus, comprising:
a transceiving module configured to receive second configuration information sent by a network device; and
a processing module configured to determine a second mapping relationship according to the second configuration information, wherein the second mapping relationship refers to a mapping relationship among an identifier of a first terminal, an identifier of a second terminal, a bearer identifier and an egress PC5 RLC channel.

31. A communication apparatus, comprising:
a processing module configured to determine a second mapping relationship, wherein the second mapping relationship refers to a mapping relationship among an identifier of a first terminal, an identifier of a second terminal, a bearer identifier and an egress PC5 RLC channel.

32. A communication apparatus, comprising:
a transceiving module configured to send second configuration information to a relay terminal, wherein the second configuration information is configured to configure a second mapping relationship to the relay terminal, and the second mapping relationship refers to a mapping relationship among an identifier of a first terminal, an identifier of a second terminal, a bearer identifier and an egress PC5 RLC channel.

33. A communication apparatus, comprising a processor and a memory, wherein a computer program is stored in the memory, and the processor is configured to execute the computer program stored in the memory, to cause the apparatus to perform the method according to any one of claims 1 to 9, or the method according to any one of claims 10 to 12, or the method according to any one of claims 13 to 15, or the method according to any one of claims 16 to 20, or the method according to any one of claims 21 to 23, or the method according to any one of claims 24 to 26.

34. A computer-readable storage medium for storing instructions which, when executed, cause the method according to any one of claims 1 to 9, or the method according to any one of claims 10 to 12, or the method according to any one of claims 13 to 15, or the method according to any one of claims 16 to 20, or the method according to any one of claims 21 to 23, or the method according to any one of claims 24 to 26 to be performed.
